# EUROPÄISCHE PATENTSCHRIFT

(11) **EP 1 085 228 B1**
(45) Veröffentlichungstag und Bekanntmachung des Hinweises auf die Patenterteilung: **06.05.2004**
(21) Anmeldenummer: 00118710.3
(22) Anmeldetag: 30.08.2000
(51) Int. Cl.: F16D 25/08

(54) **Zentralausrücker für eine hydraulische Kupplungsbetätigung**
Release device for hydraulic clutch actuator
Dispositif de débrayage pour actionneur d'embrayage hydraulique

(30) Priorität: 15.09.1999 DE 19944083
(43) Veröffentlichungstag der Anmeldung: 21.03.2001
(73) Patentinhaber: FTE automotive GmbH & Co. KG, 96106 Ebern (DE)
(72) Erfinder: Elflein, Stephen, 96184 Rentweinsdorf (DE)
(74) Vertreter: Oppermann, Mark, Dipl.-Ing.

(56) Entgegenhaltungen:
- DE-A- 19 742 468
- FR-A- 2 745 616
- US-A- 4 344 516
- US-A- 5 183 141
- US-A- 5 655 639
- US-A- 5 810 145

## Beschreibung

Die vorliegende Erfindung bezieht sich auf einen Zentralausrükker für eine hydraulische Kupplungsbetätigung gemäß dem Oberbegriff des Patentanspruchs 1. Insbesondere bezieht sich die Erfindung auf einen Zentralausrücker einer hydraulischen Kupplungsbetatigung für eine Kraftfahrzeug-Kupplung.

Eine herkömmliche hydraulische Kupplungsbetätigung für Kraftfahrzeuge hat einen an einen mit Hydraulikflüssigkeit gefüllten Ausgleichsbehälter angeschlossenen Geberzylinder, der über ein Kupplungspedal betätigt werden kann. Der Geberzylinder ist über eine Druckleitung mit einem Nehmerzylinder hydraulisch verbunden, so daß der durch Niedertreten des Kupplungspedals im Geberzylinder erzeugte Druck über die Flüssigkeitssäule in der Druckleitung auf den Nehmerzylinder übertragbar ist. Im Ergebnis wird das Ausrücklager der Kupplung von dem Nehmerzylinder mit einer Betätigungskraft beaufschlagt, um uber einen Ausrückmechanismus die Kupplungsdruckplatte von der Kupplungsmitnehmerscheibe und somit den Motor vom Getriebe des Kraftfahrzeugs zu trennen.

Um eine gleichmäßige Betätigung der Kupplung bei geringem Platzbedarf des Nehmerzylinders zu gewährleisten, ist im Stand der Technik vorgeschlagen worden, den Nehmerzylinder als Ringzylinder auszubilden, der um die Kupplungs- bzw. Getriebewelle herum angeordnet und am Getriebe befestigt ist. In dem Ringzylinder ist ein Ringkolben in axialer Richtung der Kupplungs- bzw. Getriebewelle gleitend angeordnet, der mit dem Ausrücklager der Kupplung in Wirkverbindung steht. Bei hydraulischer Beaufschlagung des Ringzylinders über die Druckleitung wirkt der Ringkolben über das Ausrücklager auf den Ausrückhebel der Kupplung, um diese auszurücken. Derartige Nehmerzylinder werden aufgrund ihrer zur Kupplungs- bzw. Getriebewelle konzentrischen Anordnung auch als Zentralausrücker bezeichnet.

Im Stand der Technik fehlt es nicht an Vorschlägen, wie derartige Zentralausrücker auszubilden sind (z.B. EP 0 095 841 B1, EP 0 168 932 B1, DE 41 09 125 A1, DE 43 13 346 A1, DE 197 42 468 A1). Den hier betrachteten Zentralausrückern ist gemein, daß sie ein Gehäuse mit einer durchgehenden Bohrung besitzen, das spanend aus einem metallischen Werkstoff gearbeitet bzw. aus Kunststoff formgespritzt ist und an einer Getriebewand im Kraftfahrzeug befestigt werden kann. In der Bohrung ist koaxial zum Gehäuse eine gezogene Stahlhülse vorgesehen, die endseitig einen sich in radialer Richtung erstreckenden Flansch aufweist, der im montierten Zustand des Zentralausrückers zwischen dem Gehäuse und der Getriebewand angeordnet ist. Bei diesem Stand der Technik begrenzt die Innenumfangsfläche der Bohrung zusammen mit dem radialen Flansch und der Außenumfangsfläche der Stahlhülse den Druckraum, in dem der auf der Stahlhülse geführte, mit einem Dichtelement versehene Ringkolben angeordnet ist.

Zur Abdichtung des Druckraums wird zwischen dem Gehäuse und dem Flansch der Stahlhülse in der Regel ein elastomerer Dichtring vorgesehen. Ferner ist die Stahlhülse an ihrem Flansch mit dem Gehäuse mittels einer Schraubverbindung (EP 0 095 841 B1), durch Verstemmen des Gehäuses (EP 0 168 932 B1), mittels eines Sicherungsrings (DE 41 09 125 A1), durch eine Schweißverbindung, Nietung, Durchsetzfügung oder eine Rollverbindung (DE 43 13 346 A1) bzw. mittels einer Schnappverbindung (DE 197 42 468 A1) fest verbunden, so daß der Dichtring zwischen dem Gehäuse und dem Flansch der Stahlhülse sowie das Dichtelement am Ringkolben nicht zugänglich sind und somit nicht beschädigt werden können. Ein Nachteil dieses Stands der Technik ist jedoch darin zu sehen, daß die Ausbildung der Verbindung zwischen dem Gehäuse und dem Flansch der Stahlhülse einen beträchtlichen Aufwand erfordert, der einen nicht unerheblichen Teil der Gestehungskosten dieses Massenartikels ausmacht.

Gegenüber dem gattungsbildenden Stand der Technik gemäß der EP 0 168 932 B1 liegt der Erfindung daher die Aufgabe zugrunde, einen einfach ausgebildeten Zentralausrücker zu schaffen, der ohne die Gefahr von Funktionsproblemen günstiger herzustellen ist.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 11.

Erfindungsgemäß ist bei einem Zentralausrücker für eine hydraulische Kupplungsbetätigung, der ein Gehäuse und eine mit einem Flansch versehene Hülse aufweist, die zusammen einen Druckraum zur Aufnahme eines Ringkolbens begrenzen, mittels dessen ein auf der Hülse geführtes Ausrücklager verschiebbar ist, wobei eine das Gehäuse und das Ausrücklager auseinander spannende Feder das Gehäuse mit einer auf den Flansch gerichteten Kraft beaufschlagt und zwischen dem Gehäuse und dem Flansch eine Dichtung zur Abdichtung des Druckraums angeordnet ist, ein für den Betrieb des Zentralausrückers abnehmbares Sicherungselement vorgesehen, das im unmontierten Zustand des Zentralausrückers einen Anschlag für das Gehäuse ausbildet und das Gehäuse alleine daran hindert, sich entgegen der Kraft der Feder über einen vorbestimmten Betrag hinaus vom Flansch der Hülse wegzubewegen.

Mit anderen Worten gesagt besteht zwischen dem Gehäuse des Zentralausrückers und der Hülse keine feste Verbindung, so daß die Herstellung des Zentralausrückers insgesamt vereinfacht ist. Die Erfindung macht sich hierbei die Erkenntnis zunutze, daß die aus dem Stand der Technik bekannten Befestigungen der Hülse am Gehäuse eigentlich nur bis zur Montage des Zentralausrückers im Kraftfahrzeug notwendig sind, weil im montierten Zustand des Zentralausrückers der Flansch der Hülse zwischen dem Gehäuse des Zentralausrückers auf der einen Seite und auf der anderen Seite einer Gehäusewand bzw. einem Gehäusedeckel des Getriebes, an der das Gehäuse des Zentralausrückers z.B. mittels Schrauben befestigt ist, festgelegt ist. Für das Verpacken, die Lagerung, den Transport bzw. die Montage des Zentralausrückers ist erfindungsgemäß das abnehmbare Sicherungselement vorgesehen, welches durch die beanspruchte Festlegung des Gehäuses bezüglich des Flansches der Hülse unterstützt durch die schon im Stand der Technik aus Funktions- und Geräuschgründen vorgesehene Feder verhindert, daß die Dichtung zwischen dem Gehäuse und dem Flansch der Hülse bzw. das Dichtelement am Ringkolben zugänglich ist und dabei beschädigt werden kann, was zu Undichtigkeiten im Betrieb des Zentralausrückers führen könnte. Das für den Betrieb des Zentralausrückers nach dessen Montage im Kraftfahrzeug vom Zentralausrücker abzunehmende Sicherungselement kann in vorteilhafter Weise wiederverwendet werden bzw. ist mehrfach verwendbar. Ein weiterer Vorteil besteht darin, daß die Dichtung zwischen dem Gehäuse und dem Flansch der Hülse leicht ausgetauscht werden kann, wenn ein Ersatz aufgrund von z.B. Materialalterung notwendig erscheint.

Zweckmäßig ist nach der Lehre des Patentanspruchs 2 das Gehäuse an seiner dem Flansch der Hülse zugewandten Stirnfläche oder der Flansch der Hülse an seiner dem Gehäuse zugewandten Stirnfläche mit einer Ringnut versehen, in der die Dichtung aufgenommen ist, deren Dicke im unverformten Zustand größer ist als die Tiefe der Ringnut, wobei der vorbestimmte Betrag, um den sich im unmontierten Zustand des Zentralausrückers das Gehäuse vom Flansch der Hülse wegbewegen kann, kleiner oder gleich der Tiefe der Ringnut ist. Somit wird mittels des Sicherungselements zuverlässig verhindert, daß bei der angesprochenen Handhabung des Zentralausrückers außerhalb des Kraftfahrzeugs die Dichtung aus ihrer vorbestimmten Position herausgleiten und zwischen der Stirnfläche des Gehäuses und der dieser gegenüberliegenden Stirnfläche am Flansch der Hülse beschädigt werden kann.

Die Patentansprüche 3 bis 5 betreffen verschiedene bevorzugte Anordnungsvarianten für das Sicherungselement, bei denen jeweils das Ausrücklager auf der Hülse durch eine mittels eines Anschlags an der Hülse gehaltene Schiebehülse geführt und das Sicherungselement als Querschieber ausgebildet ist. Gemäß dem Patentanspruch 3 ist dieser Querschieber vorteilhaft in einem Ringspalt zwischen der Schiebehülse und dem Gehäuse an der Hülse form- und kraftschlüssig festlegbar. Alternativ dazu kann der Querschieber in einer am Außenumfang der Schiebehülse angebrachten Nut oder an einem am Außenumfang der Schiebehülse angebrachten Absatz an der Schiebehülse form- und kraftschlüssig festgelegt werden, wie im Patentanspruch 4 angegeben. Diese Anordnungsvariante betrifft Zentralausrücker, bei denen die Schiebehülse stets, d.h. selbst im vollständig ausgezogenen Zustand bei Anlage am Anschlag der Hülse mit ihrem dem Flansch der Hülse zugewandten Ende in den Ringspalt zwischen dem Gehäuse und der Hülse eingreift (siehe z.B. EP 0 168 932 B1). Gemäß einer weiteren Alternative nach dem Patentanspruch 5 kann der Querschieber in einer am Außenumfang des Gehäuses angebrachten Nut oder an einem am Außenumfang des Gehäuses angebrachten Absatz am Gehäuse form- und kraftschlüssig festgelegt werden und weist eine Anschlagfläche für eine an der Schiebehülse befestigte, das Gehäuse teleskopisch umgebende Schutzhülse, wie sie z.B. aus der EP 0 095 841 B1 bekannt ist, oder für ein an der Schiebehülse befestigtes Widerlager für die Feder auf.

Nach der Lehre des Patentanspruchs 6 weist der Querschieber zweckmäßig einen Griffteil auf, von dem sich zwei Schenkel wegerstrecken, die in der Draufsicht gesehen im wesentlichen die Form eines C's bilden. Zur besseren Handhabung des Querschiebers können die Griffflächen des Griffteil jeweils mit einem Profil versehen sein, wie im Patentanspruch 7 angegeben.

Der Patentanspruch 8 sieht vor, daß die Schenkel des Querschiebers elastisch auffederbar sind und eine teilzylindrische Innenumfangsfläche aufweisen, wobei der lichte Abstand der Schenkelenden geringfügig kleiner ist als der Durchmesser der teilzylindrischen Innenumfangsfläche, so daß der Querschieber im montierten Zustand je nach Anordnungsvariante die Hülse, die Schiebehülse bzw. das Gehäuse in der Art einer Schnappverbindung hintergreift. Im Ergebnis wird auf vorteilhaft einfache Weise verhindert, daß sich der Querschieber unbeabsichtigt vom Zentralausrücker lösen kann.

Nach der Lehre des Patentanspruchs 9 sind die Schenkelenden auf den einander zugewandten Seiten mit jeweils einer Fügeschräge versehen, was das Fügen des Querschiebers zum Zentralausrücker erleichtert.

Das Sicherungselement bzw. der Querschieber ist insbesondere dann einfach und kostengünstig herstellbar, wenn es / er aus Kunststoff besteht, wie im Patentanspruch 10 angegeben. Der Patentanspruch 11 sieht schließlich vor, daß das Gehäuse des Zentralausrückers vorteilhaft aus Kunststoff besteht, während die Hülse aus Stahl gefertigt ist.

Im folgenden wird die Erfindung anhand eines bevorzugten Ausführungsbeispiels unter Bezugnahme auf die beigefügte Zeichnung näher erläutert. Darin zeigen:
- Fig. 1: eine Längsschnittansicht durch einen erfindungsgemäß ausgebildeten Zentralausrücker mit montiertem Sicherungselement,
- Fig. 2: eine Schnittansicht des in Fig. 1 dargestellten Zentralausrückers entsprechend dem Schnittverlauf A-A in Fig. 1,
- Fig. 3: eine perspektivische Darstellung des in Fig. 1 gezeigten Zentralausrückers mit montiertem Sicherungselement und
- Fig. 4: eine perspektivische Darstellung des in Fig. 1 gezeigten Zentralausrückers mit abgenommenem Sicherungselement.

In den Figuren ist ein Zentralausrücker 10 für eine hydraulische Kupplungsbetätigung für Trockenreibkupplungen im nicht montierten Zustand in Grundstellung dargestellt. Der Zentralausrücker 10 weist ein Gehäuse 12 aus Kunststoff auf und hat eine mit einem kreisringförmigen radialen Flansch 14 versehene Hülse 16, die aus einem Stahlblech gezogen ist. Das Gehäuse 12 und die Hülse 16 begrenzen zusammen einen Druckraum 18, in dem ein Ringkolben 20 aufgenommen ist. Ein auf der Hülse 16 geführtes Ausrücklager 22 ist in an sich bekannter Weise mittels des Ringkolbens 20 verschiebbar, um eine nicht dargestellte Kupplung auszurücken. Das Gehäuse 12 und das Ausrücklager 22 sind durch eine Feder 24, im vorliegenden Fall eine Schraubendruckfeder, auseinander gespannt, die das Gehäuse 12 mit einer auf den Flansch 14 gerichteten Kraft beaufschlagt. Zwischen dem Gehause 12 und dem Flansch 14 ist eine Dichtung 26 zur Abdichtung des Druckraums 18 angeordnet. Ein für den Betrieb des Zentralausrückers 10 abnehmbares Sicherungselement, im dargestellten Ausführungsbeispiel ein vorzugsweise aus Kunststoff bestehender, flacher Querschieber 28, bildet im unmontierten Zustand des Zentralausrückers 10 einen Anschlag für das Gehäuse 12 aus und hindert das Gehäuse 12 alleine daran, sich entgegen der Kraft der Feder 24 über einen vorbestimmten Betrag hinaus vom Flansch 14 der Hülse 16 wegzubewegen, wie noch näher beschrieben werden wird.

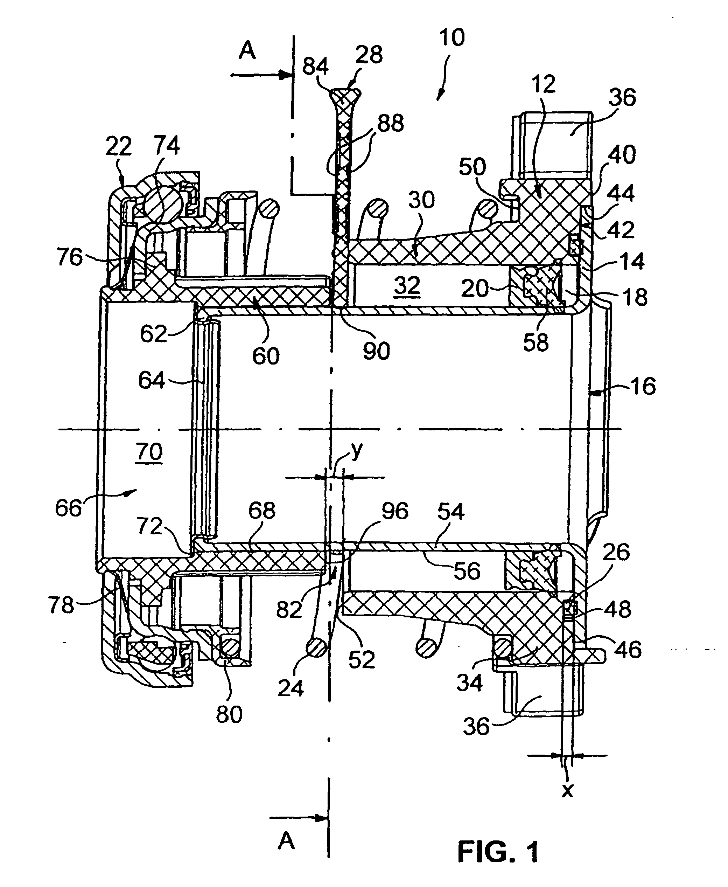

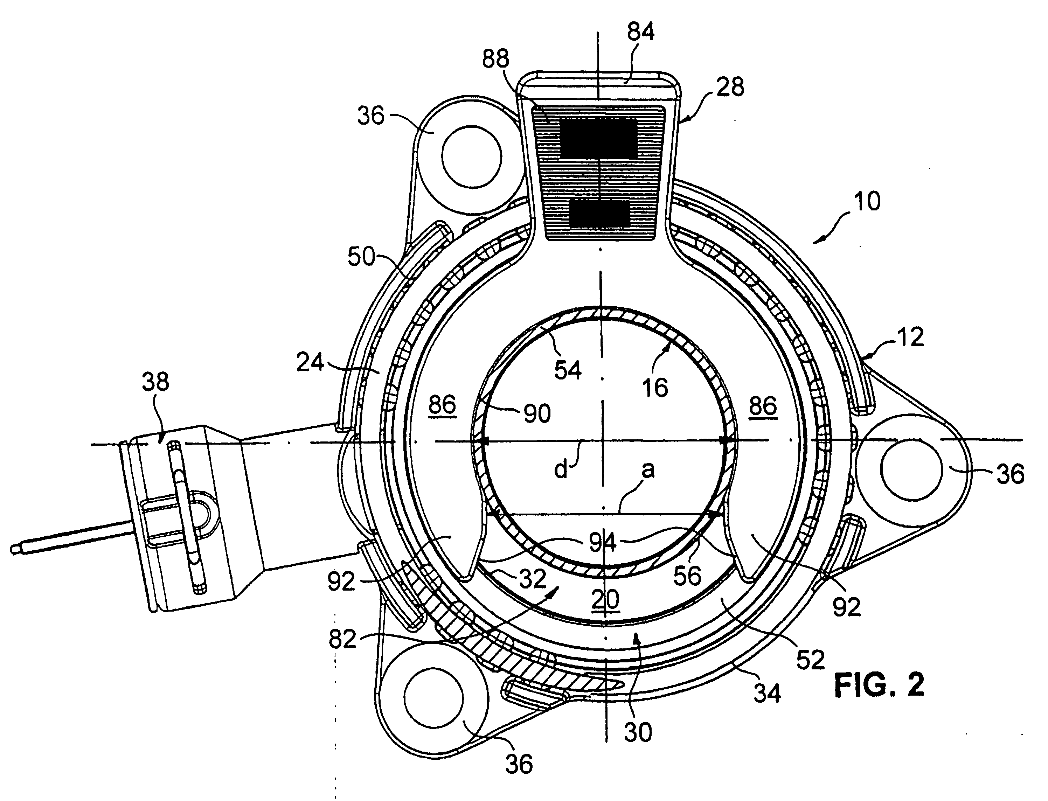

Das Gehäuse 12 hat einen im wesentlichen hohlzylindrischen Wandungsabschnitt 30, der eine zentrale Durchgangsbohrung 32 mit konstantem Durchmesser aufweist und an seinem in Fig. 1 rechten Ende in einen in der Draufsicht im wesentlichen runden Befestigungsflansch 34 übergeht. Der Befestigungsflansch 34 ist gemäß Fig. 2 am Außenumfang mit drei symmetrisch verteilten Befestigungsaugen 36 versehen, die im Kraftfahrzeug der Befestigung des Zentralausrückers 10 an einer Getriebewand bzw. einem Getriebedeckel (nicht dargestellt) mittels beispielsweise Schrauben (nicht dargestellt) dienen, welche die Befestigungsaugen 36 durchgreifen. Ferner ist am Gehäuse 12 ein Hydraulikanschluß 38 vorgesehen, der über eine Bohrung (nicht dargestellt) mit dem Druckraum 18 verbunden ist, um die Zufuhr von Hydraulikflüssigkeit zum Druckraum 18 hin zu gestatten.

Die vom Wandungsabschnitt 30 des Gehäuses 12 abgewandte, zur zentrierten Befestigung des Zentralausrückers 10 an der Getriebewand bzw. dem Getriebedeckel ausgebildete Stirnflache 40 des Befestigungsflansches 34 ist mittig mit einer Zentriersenkung 42 versehen, deren Umfangsfläche 44 der radialen Zentrierung des Flansches 14 der Hülse 16 am Gehäuse 12 dient. Die ebene, kreisringformige Stirnfläche 46 der Zentriersenkung 42 weist eine in axialer Richtung eingebrachte Ringnut 48 mit einer Tiefe x zur Aufnahme der ringförmigen, vorzugsweise elastomeren Dichtung 26 auf. In Fig. 1 ist die Dichtung 26 zur Verdeutlichung ihrer tatsächlichen Abmaße im unverformten Zustand dargestellt. Es ist ersichtlich, daß die Dichtung 26 im unverformten Zustand um einen vorbestimmten Betrag dicker ist als die Tiefe x der Ringnut 48, so daß die Dichtung 26 im montierten Zustand des Zentralausrückers 10, in dem der Flansch 14 der Hülse 16 infolge seiner nicht dargestellten Anlage an der Getriebewand bzw. dem Getriebedeckel flächig an die Stirnfläche 46 der Zentriersenkung 42 des Gehäuses 12 gedrückt wird, in die Ringnut 48 gepreßt wird und den Druckraum 18 zuverlässig abdichtet. Aus der obigen Beschreibung wird deutlich, daß die Hülse 16 mit ihrem Flansch 14 zwar in bzw. an der Zentriersenkung 42 des Gehäuses 12 zentriert wird; eine feste Verbindung zwischen Hülse 16 und Gehäuse 12 ist indes nicht vorhanden.

Zum vorzugsweise formgespritzten Gehäuse 12 ist schließlich noch anzumerken, daß an dem Befestigungsflansch 34 auf der von der Zentriersenkung 42 abgewandten Seite ein im wesentlichen ringförmiges Widerlager 50 für die Feder 24 ausgebildet ist, während der Wandungsabschnitt 30 des Gehäuses 12 stirnseitig, d.h. in Fig. 1 auf der linken Seite mit einer ebenen Kreisringflache 52 abschließt, die eine Anschlagfläche für den Querschieber 28 ausbildet.

An den Flansch 14 der Hülse 16 schließt sich ein langgestreckter, hohlzylindrischer Hülsenabschnitt 54 an, der sich koaxial zur Durchgangsbohrung 32 des Gehäuse 12 über die gesamte Länge der Durchgangsbohrung 32 und darüber hinaus erstreckt. Im montierten Zustand des Zentralausrückers 10 ist die Kupplungs- bzw. Getriebewelle (nicht dargestellt) durch den Hülsenabschnitt 54 hindurch geführt. Die Außenumfangsfläche 56 des Hülsenabschnitts 54 bildet eine Lauf- bzw. Führungsfläche sowohl für den metallischen Ringkolben 20, an dem druckraumseitig ein in Fig. 1 im unverformten Zustand dargestelltes, elastomeres Dichtelement 58 befestigt ist, welches an der Durchgangsbohrung 32 des Gehäuses 12 und an der Außenumfangsfläche 56 der Hülse 16 anliegt, als auch für eine Schiebehülse 60 aus Kunststoff aus, die das Ausrücklager 22 trägt. Am in Fig. 1 linken, vom Flansch 14 abgewandten Ende hat die Hülse 16 schließlich einen vom Hülsenabschnitt 54 radial nach innen vorstehenden Kragen 62, welcher der Befestigung eines Blechrings 64 dient, der einen Anschlag für die Schiebehülse 60 ausbildet, wie noch beschrieben werden wird.

Die vom Ringkolben 20 getrennte Schiebehülse 60 hat eine gestufte Durchgangsbohrung 66 mit einem durchmesserkleineren Abschnitt 68, an dem die Schiebehülse 60 auf der Außenumfangsfläche 56 des Hülsenabschnitts 54 gleitend geführt ist, derart, daß die Schiebehülse 60 in den axialen Ringspalt zwischen der Durchgangsbohrung 32 des Gehäuses 12 und der Außenumfangsfläche 56 der Hülse 16 eintauchen kann, um stirnseitig mit dem Ringkolben 20 in Wirkeingriff zu kommen. Ferner weist die gestufte Durchgangsbohrung 66 am freien Ende der Schiebehülse 60 einen durchmessergrößeren Abschnitt 70 auf, der mit dem durchmesserkleineren Abschnitt 68 einen Absatz 72 ausbildet, welcher als Anschlagfläche dient, mit der die Schiebehülse 60 an dem am Kragen 62 des Hülsenabschnitts 54 form- und kraftschlüssig befestigten Blechring 64 anschlagen kann, welcher über die Außenumfangsfläche 56 des Hülsenabschnitts 54 nach radial außen übersteht, zum durchmessergrößeren Abschnitt 70 der gestuften Durchgangsbohrung 66 aber noch ein geringfügiges Radialspiel hat. Im Ergebnis hält der einmal montierte Blechring 64 die Schiebehülse 60 an der Hülse 16 bzw. verhindert, daß die Schiebehülse 60 von der Hulse 16 abgezogen werden kann.

Am Außenumfang der Schiebehülse 60 ist ein an sich bekanntes Ausrücklager 22 mit seinem Innenring 74 gegen einen Bund 76 der Schiebehülse 60 mittels eines Sicherungsrings 78 befestigt. Schließlich ist am Innenring 74 des Ausrücklagers 22 ein weiteres ringförmiges, aus Kunststoff bestehendes Widerlager 80 für die Feder 24 form- und kraftschlüssig festgelegt.

In der dargestellten Grundstellung des Zentralausrückers 10 spannt die zwischen den Widerlagern 50, 80 unter Vorspannung eingefügte Feder 24 das Gehäuse 12 und das Ausrücklager 22 auf der Hülse 16 in axialer Richtung derart auseinander, daß auf der in Fig. 1 rechten Seite das Gehäuse 12 mit seiner Stirnfläche 46 bzw. der Dichtung 26 gegen den Flansch 14 der Hülse 16 gedrückt bzw. der Flansch 14 der Hülse 16 in Richtung der Stirnfläche 46 des Gehäuses 12 gezogen wird, während auf der in Fig. 1 linken Seite die Schiebehülse 60 mit ihrem Absatz 72 über das Widerlager 80, den Innenring 74 des Ausrücklagers 22 und den Sicherungsring 78 auf Anschlag gegen den am Hülsenabschnitt 54 befestigten Blechring 64 gehalten wird. Um bei der Montage, dem Verpacken, der Lagerung bzw. dem Transport nun zu verhindern, daß sich das Gehäuse 12 gegen die relativ kleine Kraft der Feder 24 vom Flansch 14 der Hülse 16 unbeabsichtigt wegbewegt, wobei die Dichtung 26 und/oder das Dichtelement 58 beschädigt werden könnten, ist der für den Betrieb des Zentralausrückers 10 abnehmbare Querschieber 28 vorgesehen, der im dargestellten Ausführungsbeispiel in einem radialen Ringspalt 82 vorbestimmter Breite y zwischen der Kreisringfläche 52 des Gehäuses 12 und der Schiebehülse 60 an der Außenumfangsfläche 56 des Hülsenabschnitts 54 der Hülse 16 form- und kraftschlüssig festgelegt werden kann.

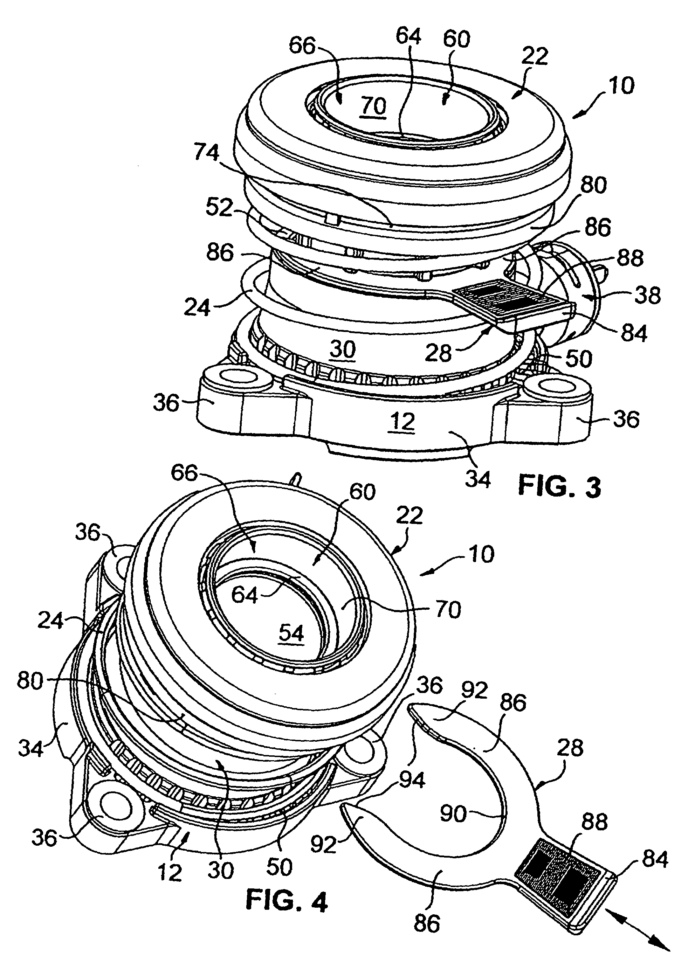

In den Fig. 2, 3 und 4 ist der vorzugsweise aus Kunststoff gefertigte Querschieber 28 deutlich zu erkennen. Gemäß insbesondere Fig. 2 weist der an seinen Kanten allseits abgerundete Querschieber 28 einen Griffteil 84 auf, von dem sich zwei Schenkel 86 wegerstrecken, die in der Draufsicht gesehen im wesentlichen die Form eines C's bilden. Der sich in Richtung der Schenkel 86 in der Draufsicht geringfügig verjungende Griffteil 84 ist zur besseren Handhabung des Querschiebers 28 auf beiden Seiten mit jeweils einem Profil 88 versehen, wie in Fig. 1 gezeigt ist. Die über ihre Länge eine im wesentlichen konstante Breite aufweisenden Schenkel 86 des Querschiebers 28 sind nach außen elastisch auffederbar und bilden eine teilzylindrische Innenumfangsfläche 90 aus, deren Durchmesser d im wesentlichen dem Durchmesser der Außenumfangsfläche 56 des Hülsenabschnitts 54 entspricht. Dabei ist der lichte Abstand a der Schenkelenden 92 geringfügig kleiner als der Durchmesser d der teilzylindrischen Innenumfangsfläche 90, so daß der Querschieber 28 im montierten Zustand den Hülsenabschnitt 54 der Hülse 16 in der Art einer Schnappverbindung hintergreift, wie in Fig. 2 gut zu erkennen ist. Um das Fügen des Querschiebers 28 in einer zur Längsachse des Zentralausrückers 10 senkrechten, in Fig. 4 durch einen Doppelpfeil angedeuteten Richtung zu erleichtern, sind die Schenkelenden 92 auf den einander zugewandten Seiten mit jeweils einer Fügeschräge 94 versehen.

Zur Montage am Zentralausrücker 10 wird der Querschieber 28 zwischen den Windungen der Feder 24 hindurch in den Ringspalt 82 zwischen Gehäuse 12 und Schiebehülse 60 geschoben, bis die Fügeschrägen 94 an den Schenkelenden 92 des Querschieber 28 an der Außenumfangsfläche 56 des Hülsenabschnitts 54 zur Anlage gelangen. Bei einem weiteren Schieben des Querschiebers 28 in Richtung der Längsachse des Zentralausrückers 10 werden die Schenkel 86 vorübergehend aufgespreizt und schnappen hinter der Außenumfangsfläche 56 des Hülsenabschnitts 54 wieder zusammen, so daß der Querschieber 28 in radialer Richtung unter Anlage der teilzylindrischen Innenumfangsfläche 90 an der Außenumfangsfläche 56 des Hulsenabschnitts 54 form- und kraftschlussig festliegt. In axialer Richtung des Zentralausrückers 10 gesehen verhindert der Querschieber 28 nun, daß sich das Gehäuse 12 entgegen der Kraft der Feder 24 über einen vorbestimmten Betrag hinaus vom Flansch 14 der Hülse 16 entfernen kann. Versucht man das Gehäuse 12 entgegen der Kraft der Feder 24 vom Flansch 14 der Hülse 16 wegzudrücken, kommt das Gehäuse 12 mit der Kreisringfläche 52 des Wandungsabschnitts 30 am Querschieber 28 zur Anlage, der sich seinerseits über die dem Querschieber 28 zugewandte, ebene Kreisringfläche 96 der Schiebehülse 60 und den Absatz 72 der Schiebehülse 60 an dem am Kragen 62 des Hülsenabschnitts 54 der Hülse 16 befestigten Blechring 64 abstützt.

Die Demontage des Querschiebers 28, die für den Betrieb des Zentralausrückers 10 natürlich notwendig ist, weil sich dabei die Schiebehülse 60 in die Durchgangsbohrung 32 des Gehäuses 12 hinein bewegen muß, um mit dem Ringkolben 20 in Wirkverbindung zu kommen, erfolgt analog in umgekehrter Richtung.

Der eigentliche hydraulische Betrieb des Zentralausrückers 10 in dem im Kraftfahrzeug montierten Zustand ist hinlänglich bekannt. Auf eine diesbezügliche Beschreibung wird daher an dieser Stelle verzichtet.

Für den Fachmann ist ersichtlich, daß der vorbestimmte Betrag, um den sich im unmontierten Zustand des Zentralausruckers 10 das Gehäuse 12 vom Flansch 14 der Hülse 16 wegbewegen kann, bis es an einer weiteren Bewegung durch den Querschieber 28 gehindert wird, konstruktiv ohne Probleme den jeweiligen Erfordernissen entsprechend eingestellt werden kann, nämlich durch entsprechende Wahl der Dicke des Querschiebers 28 und/oder durch geeignete Einstellung der Breite y des Ringspalts 82, was sich leicht durch entsprechende Wahl der axialen Länge des Gehäuses 12, der Hülse 16 und/oder der Schiebehülse 60 realisieren läßt. Dabei sollte der vorbestimmte Betrag, um den sich im unmontierten Zustand des Zentralausrückers 10 das Gehäuse 12 vom Flansch 14 der Hülse 16 wegbewegen kann, vorzugsweise kleiner oder gleich der Tiefe x der Ringnut 48 gewählt werden, damit die Dichtung 26 nicht aus der Ringnut 48 am Gehäuse 12 hinausgleiten kann. Natürlich kann dieser vorbestimmte Betrag auch annähernd Null betragen, so daß bei aufgestecktem Querschieber 28 im wesentlichen keine Relativbewegung zwischen Gehäuse 12 und Hülse 16 mehr moglich ist.

Im obigen Ausführungsbeispiel wurde beschrieben, daß der Querschieber 28 in dem Ringspalt 82 zwischen Gehäuse 12 und Schiebehülse 60 an der Hülse 16 form- und kraftschlüssig festgelegt wird. Ebenso ist es aber möglich, daß der Querschieber 28 in einer am Außenumfang der Schiebehülse 60 angebrachten Nut (nicht dargestellt) oder an einem am Außenumfang der Schiebehülse 60 angebrachten Absatz (nicht dargestellt) an der Schiebehülse 60 form- und kraftschlüssig festlegt wird, was sich bei einer konstruktiven Ausgestaltung des Zentralausrückers 10 anbieten würde, bei der die Schiebehülse 60 auch in der Grundstellung des Zentralausrückers 10 in die Durchgangsbohrung 32 des Gehäuses 12 eintaucht. Auch ist eine konstruktive Ausgestaltung denkbar, bei der der Querschieber 28 in einer am Außenumfang des Gehäuses 12 angebrachten Nut (nicht dargestellt) oder an einem am Außenumfang des Gehäuses 12 angebrachten Absatz (nicht dargestellt) am Gehäuse 12 form- und kraftschlüssig festgelegt wird und dabei eine Anschlagfläche ausbildet für eine an der Schiebehülse 60 befestigte, das Gehäuse 12 teleskopisch umgebende Schutzhülse (nicht dargestellt) aus vorzugsweise Kunststoff oder für ein an der Schiebehülse 60 bzw. dem Ausrücklager 22 befestigtes, verlängertes Widerlager (nicht dargestellt) für die Feder 24.

Es wird ein Zentralausrücker für eine hydraulische Kupplungsbetätigung insbesondere für Kraftfahrzeuge offenbart, mit einem Gehäuse und einer mit einem Flansch versehenen Hülse, die zusammen einen Druckraum zur Aufnahme eines Ringkolbens begrenzen, mittels dessen ein auf der Hulse geführtes Ausrücklager verschiebbar ist. Dabei beaufschlagt eine Gehäuse und Ausrücklager auseinander spannende Feder das Gehäuse mit einer auf den Flansch gerichteten Kraft. Zwischen dem Gehäuse und dem Flansch ist ferner eine Dichtung zur Abdichtung des Druckraums angeordnet. Erfindungsgemäß ist ein für den Betrieb des Zentralausrükkers abnehmbares Sicherungselement vorgesehen, das im unmontierten Zustand des Zentralausrückers einen Anschlag für das Gehäuse ausbildet und dieses alleine daran hindert, sich entgegen der Kraft der Feder über einen vorbestimmten Betrag hinaus vom Flansch der Hülse wegzubewegen. Somit wird ein einfach aufgebauter Zentralausrücker geschaffen, der verglichen mit dem Stand der Technik ohne die Gefahr von Funktionsproblemen günstiger herzustellen ist.

### Bezugszeichenliste

- 10: Zentralausrücker
- 12: Gehäuse
- 14: Flansch
- 16: Hülse
- 18: Druckraum
- 20: Ringkolben
- 22: Ausrücklager
- 24: Feder
- 26: Dichtung
- 28: Querschieber
- 30: Wandungsabschnitt
- 32: Durchgangsbohrung
- 34: Befestigungsflansch
- 36: Befestigungsauge
- 38: Hydraulikanschluß
- 40: Stirnfläche
- 42: Zentriersenkung
- 44: Umfangsfläche
- 46: Stirnfläche
- 48: Ringnut
- 50: Widerlager
- 52: Kreisringfläche
- 54: Hülsenabschnitt
- 56: Außenumfangsfläche
- 58: Dichtelement
- 60: Schiebehülse
- 62: Kragen
- 64: Blechring
- 66: gestufte Durchgangsbohrung
- 68: durchmesserkleinerer Abschnitt
- 70: durchmessergrößerer Abschnitt
- 72: Absatz
- 74: Innenring
- 76: Bund
- 78: Sicherungsring
- 80: Widerlager
- 82: Ringspalt
- 84: Griffteil
- 86: Schenkel
- 88: Profil
- 90: teilzylindrische Innenumfangsfläche
- 92: Schenkelende
- 94: Fügeschräge
- 96: Kreisringfläche

- a: lichter Abstand der Schenkelenden 92
- d: Durchmesser der Innenumfangsfläche 90
- x: Tiefe der Ringnut 48
- y: Breite des Ringspalts 82

## Patentansprüche

1. Zentralausrücker (10) für eine hydraulische Kupplungsbetätigung, mit einem Gehäuse (12) und einer mit einem Flansch (14) versehenen Hülse (16), die zusammen einen Druckraum (18) zur Aufnahme eines Ringkolbens (20) begrenzen, mittels dessen ein auf der Hülse (16) geführtes Ausrücklager (22) verschiebbar ist, wobei eine das Gehäuse (12) und das Ausrücklager (22) auseinander spannende Feder (24) das Gehäuse (12) mit einer auf den Flansch (14) gerichteten Kraft beaufschlagt und zwischen dem Gehäuse (12) und dem Flansch (14) eine Dichtung (26) zur Abdichtung des Druckraums (18) angeordnet ist, **gekennzeichnet durch** ein für den Betrieb des Zentralausrückers (10) abnehmbares Sicherungselement (28), das im unmontierten Zustand des Zentralausrückers (10) einen Anschlag für das Gehäuse (12) ausbildet und das Gehäuse (12) alleine daran hindert, sich entgegen der Kraft der Feder (24) über einen vorbestimmten Betrag hinaus vom Flansch (14) der Hülse (16) wegzubewegen.

2. Zentralausrücker (10) nach Anspruch 1, **dadurch gekennzeichnet, daß** das Gehäuse (12) an seiner dem Flansch (14) der Hülse (16) zugewandten Stirnflache (46) oder der Flansch (14) der Hülse (16) an seiner dem Gehause (12) zugewandten Stirnfläche mit einer Ringnut (48) versehen ist, in der die Dichtung (26) aufgenommen ist, deren Dicke im unverformten Zustand größer ist als die Tiefe (x) der Ringnut (48), wobei der vorbestimmte Betrag, um den sich im unmontierten Zustand des Zentralausrückers (10) das Gehäuse (12) vom Flansch (14) der Hülse (16) wegbewegen kann, kleiner oder gleich der Tiefe (x) der Ringnut (48) ist.

3. Zentralausrücker (10) nach Anspruch 1 oder 2, **dadurch gekennzeichnet, daß** das Ausrücklager (22) auf der Hülse (16) durch eine mittels eines Anschlags (64) an der Hülse (16) gehaltene Schiebehülse (60) geführt ist, wobei das Sicherungselement als Querschieber (28) ausgebildet ist, der in einem Ringspalt (82) zwischen der Schiebehülse (60) und dem Gehäuse (12) an der Hülse (16) form- und kraftschlüssig festlegbar ist.

4. Zentralausrücker (10) nach Anspruch 1 oder 2, **dadurch gekennzeichnet, daß** das Ausrücklager (22) auf der Hülse (16) durch eine mittels eines Anschlags (64) an der Hülse (16) gehaltene Schiebehülse (60) geführt ist, wobei das Sicherungselement als Querschieber (28) ausgebildet ist, der in einer am Außenumfang der Schiebehülse (60) angebrachten Nut oder an einem am Außenumfang der Schiebehülse (60) angebrachten Absatz an der Schiebehülse (60) form- und kraftschlüssig festlegbar ist.

5. Zentralausrücker (10) nach Anspruch 1 oder 2, **dadurch gekennzeichnet, daß** das Ausrücklager (22) auf der Hülse (16) durch eine mittels eines Anschlags (64) an der Hülse (16) gehaltene Schiebehülse (60) geführt ist, wobei das Sicherungselement als Querschieber (28) ausgebildet ist, der in einer am Außenumfang des Gehäuses (12) angebrachten Nut oder an einem am Außenumfang des Gehäuses (12) angebrachten Absatz am Gehäuse (12) form- und kraftschlüssig festlegbar ist und der eine Anschlagflache für eine an der Schiebehülse (60) befestigte, das Gehäuse (12) teleskopisch umgebende Schutzhulse oder für ein an der Schiebehulse (60) befestigtes Widerlager (80) für die Feder (24) aufweist.

6. Zentralausrücker (10) nach einem der Ansprüche 3 bis 5, **dadurch gekennzeichnet, daß** der Querschieber (28) einen Griffteil (84) aufweist, von dem sich zwei Schenkel (86) wegerstrekken, die in der Draufsicht (Fig. 2) gesehen im wesentlichen die Form eines C's bilden.

7. Zentralausrücker (10) nach Anspruch 6, **dadurch gekennzeichnet, daß** die Griffflächen des Griffteil (84) jeweils mit einem Profil (88) versehen sind.

8. Zentralausrücker (10) nach Anspruch 6 oder 7, **dadurch gekennzeichnet, daß** die Schenkel (86) elastisch auffederbar sind und eine teilzylindrische Innenumfangsfläche (90) aufweisen, wobei der lichte Abstand (a) der Schenkelenden (92) geringfügig kleiner ist als der Durchmesser (d) der teilzylindrischen Innenumfangsfläche (90), so daß der Querschieber (28) im montierten Zustand die Hülse (16), die Schiebehülse (60) bzw. das Gehause (12) in der Art einer Schnappverbindung hintergreift.

9. Zentralausrücker (10) nach einem der Ansprüche 6 bis 8, **dadurch gekennzeichnet, daß** die Schenkelenden (92) auf den einander zugewandten Seiten mit jeweils einer Fügeschräge (94) versehen sind.

10. Zentralausrücker (10) nach einem der vorhergehenden Anspruche, **dadurch gekennzeichnet, daß** das Sicherungselement bzw. der Querschieber (28) aus Kunststoff besteht.

11. Zentralausrücker (10) nach einem der vorhergehenden Anspruche, **dadurch gekennzeichnet, daß** das Gehäuse (12) aus Kunststoff und die Hülse (16) aus Stahl besteht.

## Claims

1. Central release device (10) for a hydraulic clutch actuation system, with a housing (12) and a sleeve (16) provided with a flange (14), which together define a pressure chamber (18) for accommodating an annular piston (20), by means of which a release bearing (22) guided on the sleeve (16) can be displaced, wherein a spring (24), which braces the housing (12) and the release bearing (22) apart, subjects the housing (12) to a force directed at the flange (14), and a seal (26) is provided between the housing (12) and the flange (14) to seal off the pressure chamber (18), **characterized by** a retaining element (28), which can be detached to operate the central release device (10) and which, when the central release device (10) is in the non-mounted state, forms a stop for the housing (12) and prevents the housing (12) alone from moving against the force of the spring (24) away from the flange (14) of the sleeve (16) beyond a predetermined amount.

2. Central release device (10) according to claim 1, **characterized in that** the housing (12) is provided at its end face (46) which is turned towards the flange (14) of the sleeve (16) or the flange (14) of the sleeve (16) is provided at its end face which is turned towards the housing (12) with an annular groove (48) which accommodates the seal (26), the thickness of which is greater in the non-deformed state than the depth (x) of the annular groove (48), wherein the predetermined amount by which the housing (12) can move away from the flange (14) of the sleeve (16) when the central release device (10) is in the non-mounted state is less than or equal to the depth (x) of the annular groove (48).

3. Central release device (10) according to claim 1 or 2, **characterized in that** the release bearing (22) is guided on the sleeve (16) by a sliding sleeve (60), which is held at the sleeve (16) by means of a stop (64), wherein the retaining element is formed as a cross slide (28), which can be secured positively and non-positively at the sleeve (16) in an annular gap (82) between the sliding sleeve (60) and the housing (12).

4. Central release device (10) according to claim 1 or 2, **characterized in that** the release bearing (22) is guided on the sleeve (16) by a sliding sleeve (60), which is held at the sleeve (16) by means of a stop (64), wherein the retaining element is formed as a cross slide (28), which can be secured positively and non-positively at the sliding sleeve (60) in a groove made in the outer circumference of the sliding sleeve (60) or at an offset made at the outer circumference of the sliding sleeve (60).

5. Central release device (10) according to claim 1 or 2, **characterized in that** the release bearing (22) is guided on the sleeve (16) by a sliding sleeve (60), which is held at the sleeve (16) by means of a stop (64), wherein the retaining element is formed as a cross slide (28), which can be secured positively and non-positively at the housing (12) in a groove made in the outer circumference of the housing (12) or at an offset made at the outer circumference of the housing (12), and which comprises a stop face for a protective sleeve, which is attached to the sliding sleeve (60) and surrounds the housing (12) telescopically, or for an abutment (80), attached to the sliding sleeve (60), for the spring (24).

6. Central release device (10) according to one of the claims 3 to 5, **characterized in that** the cross slide (28) comprises a handle part (84) from which two arms (86) extend which, viewed in a plan view (Figure 2), essentially form a C shape.

7. Central release device (10) according to claim 6, **characterized in that** the handle faces of the handle part (84) are each provided with a profile (88).

8. Central release device (10) according to claim 6 or 7, **characterized in that** the arms (86) can spring out elastically and comprise a part-cylindrical inner circumferential face (90), wherein the clearance (a) between the arm ends (92) is slightly smaller than the diameter (d) of the part-cylindrical inner circumferential face (90), so that the cross slide (28) engages behind the sleeve (16), the sliding sleeve (60) or the housing (12) like a snap connection in the mounted state.

9. Central release device (10) according to one of the claims 6 to 8, **characterized in that** the arm ends (92) are provided at the sides which are turned towards one another with a respective fitting bevel (94).

10. Central release device (10) according to one of the preceding claims, **characterized in that** the retaining element or cross slide (28) consists of a plastics material.

11. Central release device (10) according to one of the preceding claims, **characterized in that** the housing (12) consists of a plastics material and the sleeve (16) of steel.

## Revendications

1. Dispositif de débrayage central (10) pour un actionneur d'embrayage hydraulique, comportant un boîtier (12) et une douille (16) pourvue d'une bride (14), qui délimitent ensemble une chambre de pression (18) destinée à recevoir un piston annulaire (20) au moyen duquel un palier de débrayage (22) guidé sur la douille (16) peut être déplacé, un ressort (24), qui force en éloignement l'un de l'autre le boîtier (12) et le palier de débrayage (22), sollicitant le boîtier (12) avec une force dirigée sur la bride (14), et un joint (26) étant agencé entre le boîtier (12) et la bride (14) pour étancher la chambre de pression (18), **caractérisé par** un élément de sécurité (28) amovible pour le fonctionnement du dispositif de débrayage central (10), lequel forme à l'état non monté du dispositif de débrayage central (10) une butée pour le boîtier (12) et lequel empêche le boîtier (12) lui seul de s'éloigner de la bride (14) de la douille (16), au-delà d'une valeur prédéterminée, à l'encontre de la force du ressort (24).

2. Dispositif de débrayage central (10) selon la revendication 1, **caractérisé en ce que** soit le boîtier (12), sur sa face frontale (46) tournée vers la bride (14) de la douille (16) soit la bride (14) de la douille (16), sur sa face frontale tournée vers le boîtier (12), est pourvu(e) d'une gorge annulaire (48) dans laquelle est reçu le joint (26) dont l'épaisseur, à l'état non déformé, est supérieure à la profondeur (x) de la gorge annulaire (48), la valeur prédéterminée, de laquelle le boîtier (12) peut, à l'état non monté du dispositif de débrayage (10), s'éloigner de la bride (14) de la douille (16), est inférieure ou égale à la profondeur (x) de la gorge annulaire (48).

3. Dispositif de débrayage central (10) selon l'une ou l'autre des revendications 1 et 2, **caractérisé en ce que** le dispositif de débrayage (22) est guidé sur la douille (16) par un manchon coulissant (60) retenu sur la douille (16) au moyen d'une butée (64), l'élément de sécurité étant réalisé sous forme de coulisse transversale (28) qui peut être immobilisée sur la douille (16) par coopération de formes et de forces dans une fente annulaire (82) entre le manchon coulissant (60) et le boîtier (12).

4. Dispositif de débrayage central (10) selon l'une ou l'autre des revendications 1 et 2, **caractérisé en ce que** le dispositif de débrayage (22) est guidé sur la douille (16) par un manchon coulissant (60) retenu sur la douille (16) au moyen d'une butée (64), l'élément de sécurité étant réalisé sous forme de coulisse transversale (28) qui peut être immobilisée sur le manchon coulissant (60) par coopération de formes et de forces dans une gorge ménagée sur la périphérie extérieure du manchon coulissant (60) ou sur un talon rapporté sur la périphérie extérieure du manchon coulissant (60).

5. Dispositif de débrayage central (10) selon l'une ou l'autre des revendications 1 et 2, **caractérisé en ce que** le dispositif de débrayage (22) est guidé sur la douille (16) par un manchon coulissant (60) retenu sur la douille (16) au moyen d'une butée (64), l'élément de sécurité étant réalisé sous forme de coulisse transversale (28) qui peut être immobilisée sur le boîtier (12) par coopération de formes et de forces, dans une gorge ménagée sur la périphérie extérieure du boîtier (12) ou sur un talon rapporté sur la périphérie extérieure du boîtier (12), et qui présente une surface de butée pour un manchon de protection fixé sur le manchon coulissant (60) et entourant de manière télescopique le boîtier (12) ou pour un contre-appui (80) fixé sur le manchon coulissant (60), pour le ressort (24).

6. Dispositif de débrayage central (10) selon l'une des revendications 3 à 5, **caractérisé en ce que** la coulisse transversale (28) présente une partie de préhension (84) depuis laquelle s'écartent deux branches (86) qui, vues de dessus (figure 2), forment sensiblement un C.

7. Dispositif de débrayage central (10) selon la revendication 6, **caractérisé en ce que** les surfaces de préhension de la partie de préhension (84) sont chacune pourvues d'un profil (88).

8. Dispositif de débrayage central (10) selon l'une ou l'autre des revendications 6 et 7, **caractérisé en ce que** les branches (86) peuvent se détendre de façon élastique et présentent une surface périphérique intérieure (90) partiellement cylindrique, l'écartement (a) entre les extrémités des branches (92) étant légèrement inférieur au diamètre (d) de la surface périphérique intérieure (90) partiellement cylindrique, de telle sorte qu'à l'état de montage, la coulisse transversale (28) engage par l'arrière la douille (16), le manchon coulissant (60) ou le boîtier (12), respectivement, à la manière d'une liaison par encliquetage.

9. Dispositif de débrayage central (10) selon l'une des revendications 6 à 8, **caractérisé en ce que** les extrémités des branches (92) sont chacune pourvues d'un chanfrein d'assemblage (94) sur les faces tournées l'une vers l'autre.

10. Dispositif de débrayage central (10) selon l'une des revendications précédentes, **caractérisé en ce que** l'élément de sécurité ou la coulisse transversale (28) sont en matière plastique.

11. Dispositif de débrayage central (10) selon l'une des revendications précédentes, **caractérisé en ce que** le boîtier (12) est en matière plastique et la douille (16) est en acier.
